# EUROPÄISCHE PATENTANMELDUNG

(11) **EP 2 518 254 A1**
(43) Veröffentlichungstag der Anmeldung: **31.10.2012**
(21) Anmeldenummer: 12165694.6
(22) Anmeldetag: 26.04.2012
(51) Int. Cl.: E06B 9/32, F21V 23/04, G01J 1/42

(54) **Anordnung zur Erfassung des Tageslichts und System und Verfahren zur tageslichtabhängigen Steuerung**

(30) Priorität: 27.04.2011 DE 102011017582
(71) Anmelder: Zumtobel Lighting GmbH, 6850 Dornbirn (AT)
(72) Erfinder: Becken, Jens, 6850 Dornbirn (AT)
(74) Vertreter: Thun, Clemens

(57) **Zusammenfassung**

Anordnung zur Erfassung des Tageslichts (1, 11) mit einer digitalen Bilderfassungseinheit (2) und einer Auswerteeinheit (3), wobei die Auswerteeinheit (3) dazu ausgebildet ist, das durch die digitale Bilderfassungseinheit (2) erfasste Bild bezüglich Informationen zum Tageslicht auszuwerten, sowie System und Verfahren zur tageslichtabhängigen Steuerung mit mindestens einer zu steuernden Vorrichtung (5, 6), einer Steuereinheit (4, 14) zur Steuerung der Vorrichtung (5, 6) und mindestens einer Anordnung zur Erfassung des Tageslichts (1, 11), wobei die Steuereinheit (4) dazu ausgebildet ist, die zu steuerende Vorrichtung (5, 6) in Abhängigkeit der Informationen zum Tageslicht zu steuern und wobei entweder die Anordnung (1) mit der Steuereinheit (4) in Kontakt steht und dazu ausgebildet ist, der Steuereinheit (4) die Informationen zum Tageslicht zu übermitteln oder die Auswerteeinheit (3) der Anordnung zur Erfassung des Tageslichts (11) in der Steuereinheit (14) angeordnet ist.

## Beschreibung

Die vorliegende Erfindung betrifft eine Anordnung zur Erfassung des Tageslichts und ein System und Verfahren zur tageslichtabhängigen Steuerung mindestens einer zu steuernden Vorrichtung mithilfe einer Steuereinheit, wobei das System mindestens eine Anordnung zur Erfassung des Tageslichts aufweist.

Zur tageslichtabhängigen Steuerung von beispielsweise Leuchten oder Jalousien wurden bisher zumeist sogenannte Tageslichtmessköpfe bzw. Tageslichtsensoren eingesetzt, die mehrere Photozellen aufweisen. Bei einem derartigen Tageslichtmesskopf sind beispielsweise acht in verschiedene Richtungen ausgerichtete Photozellen vorgesehen, die sich in einer transparenten, halbkugelförmigen Kuppel befinden. Die als Sensoren zur Tageslichterfassung eingesetzten Photozellen verändern dabei den Widerstand je nach Stärke des Lichteinfalls. Um nun Informationen über das Tageslicht zu erhalten, wird ein derartiger Tageslichtmesskopf auf dem Dach eines Gebäudes angeordnet, in dem beispielsweise Leuchten oder Jalousien tageslichtabhängig gesteuert werden sollen.

Durch den Einsatz von Photozellen als Sensoren zur Tageslichterfassung ist es bislang lediglich möglich eine sehr beschränkte Anzahl an Informationen über das Tageslicht zu erhalten. Zusätzlich ist eine gewisse Größe des Tageslichtmesskopfs erforderlich, um die Photozellen innerhalb des Tageslichtmesskopfs derart platzieren zu können, dass die Richtungsabhängigkeit des Tageslichts ermittelt werden kann.

Aufgabe der vorliegenden Erfindung ist es somit eine Anordnung zur Erfassung des Tageslichts bzw. ein System und ein Verfahren zur tageslichtabhängigen Steuerung zu entwickeln, bei denen zusätzliche Informationen über das Tageslicht erfasst und zur Steuerung entsprechender Vorrichtungen verwendet werden können und außerdem die Anordnung zur Erfassung des Tageslichts eine kompaktere Bauweise aufweist.

Die Aufgabe wird durch eine Anordnung zur Erfassung des Tageslichts gemäß Anspruch 1, einem System zur tageslichtabhängigen Steuerung gemäß den Ansprüchen 8 und 10 und einem Verfahren zur tageslichtabhängigen Steuerung gemäß Anspruch 16 gelöst. Vorteilhafte Weiterbildungen der Erfindung sind Gegenstand der abhängigen Ansprüche.

Erfindungsgemäß wird eine Anordnung zur Erfassung des Tageslichts vorgeschlagen, die eine digitale Bilderfassungseinheit und eine Auswerteeinheit aufweist, wobei die Auswerteeinheit dazu ausgebildet ist, das durch die digitale Bilderfassungseinheit erfasste Bild bzgl. Informationen zum Tageslicht auszuwerten.

Desweiteren wird erfindungsgemäß ein System zur tageslichtabhängigen Steuerung mit mindestens einer zu steuernden Vorrichtung, einer Steuereinheit zur Steuerung der Vorrichtung und mindestens einer Anordnung zur Erfassung des Tageslichts vorgeschlagen, wobei entweder die Anordnung mit der Steuereinheit in Kontakt steht und dazu ausgebildet ist, der Steuereinheit die Informationen zum Tageslicht zu übermitteln oder die Auswerteeinheit der Anordnung zur Erfassung des Tageslichts in der Steuereinheit angeordnet ist. Bei beiden Varianten ist vorgesehen, dass die Steuereinheit dazu ausgebildet ist, die zu steuernde Vorrichtung in Abhängigkeit der Informationen zum Tageslicht zu steuern.

Außerdem ist ein erfindungsgemäßes Verfahren zur tageslichtabhängigen Steuerung einer zu steuernden Vorrichtung vorgeschlagen, bei dem mit einer digitalen Bilderfassungseinheit Bilder des Himmels erfasst werden, eine Auswerteeinheit die erfassten Bilder auf Informationen zum Tageslicht auswertet und die zu steuernde Vorrichtung in Abhängigkeit der Informationen zum Tageslicht gesteuert wird.

Bei den Informationen zum Tageslicht handelt es sich vorzugsweise um die Leuchtdichten des Himmels, Farben des Lichts und/oder Farbtemperaturen, wobei die Leuchtdichten des Himmels die Stärke der Leuchtdichten und/oder die Richtungsinformationen der Lichtquellen, beispielsweise der Sonne, angestrahlten Wolken oder angestrahlten reflektierenden Objekten, umfassen.

Hierdurch ist es nunmehr möglich, wie bereits bisher die Richtung des einfallenden Tageslichts und die Verteilung zu bestimmen. Zusätzlich ergibt sich nun aber noch die Möglichkeit, durch die Bildauswertung weitere Informationen zu erhalten, deren Bestimmung bislang nicht möglich war. So kann beispielsweise das Wolkenbild analysiert werden, um dies bei der Steuerung von zu steuernden Vorrichtungen entsprechend berücksichtigen zu können.

Vorteilhafterweise kann auch vorgesehen sein, dass die digitale Bilderfassungseinheit einen CMOS- oder CCD-Sensor und ein Weitwinkel- oder Fisch-Eye-Objektiv, das dem CMOS- oder CCD-Sensor vorgeordnet ist, aufweist.

Durch das Weitwinkel- oder Fisch-Eye-Objektiv ist es möglich, dass ein möglichst großer Bereich des Himmels durch die digitale Bilderfassungseinheit erfasst wird. Die Verwendung eines CMOS- oder CCD-Sensors, die auch häufig in Digitalkameras zum Einsatz kommen, ermöglicht außerdem eine sehr kompakte Bauweise der digitalen Bilderfassungseinheit und somit der gesamten Anordnung zur Erfassung des Tageslichts.

Wie bereits erwähnt kann desweiteren vorgesehen sein, dass die Auswerteeinheit entweder an der digitalen Bilderfassungseinheit oder beabstandet von der digitalen Bilderfassungseinheit angeordnet ist. Für den Fall, dass die Auswerteeinheit beabstandet von der digitalen Bilderfassungseinheit angeordnet ist, kann vorzugsweise vorgesehen sein, die digitale Bilderfassungseinheit mit der Auswerteeinheit in Kontakt steht und dazu ausgebildet ist, der Auswerteeinheit das erfasste Bild zu übermitteln, wobei die digitale Bilderfassungseinheit über eine Datenschnittstelle, beispielsweise TCP/IP, mit der Auswerteeinheit in Kontakt steht.

Falls die Auswerteeinheit an der digitalen Bilderfassungseinheit angeordnet ist, kann hingegen vorgesehen sein, dass die gesamte Anordnung zur Erfassung des Tageslichts über eine Datenschnittstelle, beispielsweise TCP/IP, mit der Steuereinheit des Systems zur tageslichtabhängigen Steuerung in Kontakt steht.

Ebenso kann vorteilhafterweise vorgesehen sein, dass das System zur tageslichtabhängigen Steuerung mehrere Anordnungen zur Erfassung des Tageslichts aufweist, wobei bei dem Fall, bei dem die Auswerteeinheit beabstandet von der digitalen Bilderfassungseinheit angeordnet und in die Steuereinheit integriert ist, vorgesehen sein kann, dass die Funktionen der Auswerteeinheiten der Anordnungen zur Erfassung des Tageslichts in einer gemeinsamen Auswerteeinheit zusammengefasst sind.

Zusätzlich kann vorgesehen sein, dass in dem System die digitale Bilderfassungseinheit der Anordnung zur Erfassung des Tageslichts lotrecht in den Himmel gerichtet ist, wodurch eine optimale Erfassung des Himmels und damit des Tageslichts ermöglicht wird.

Bei der mindestens einen zu steuernden Vorrichtung kann es sich um eine Leuchte handeln, wobei die Steuereinheit dazu ausgebildet ist, die Beleuchtungsstärke, Lichtfarbe und/oder Farbtemperatur der Leuchte zu steuern. Bei der mindestens einen zu steuernden Vorrichtung kann es sich aber auch um eine Blendschutzeinrichtung oder ein Abschattungssystem, beispielsweise eine Jalousie, handeln.

Zusätzlich kann vorteilhafterweise auch vorgesehen sein, dass das System Bedieneinheiten und Sensoren, beispielsweise Lichtsensoren mit Photozellen, Bewegungsmelder, Temperatursensoren und Windsensoren, aufweist, wobei die Bedieneinheiten und Sensoren an die Steuereinheit angeschlossen sind und die Steuereinheit dazu ausgebildet ist, die zu steuernde Vorrichtung auch in Abhängigkeit von Informationen der Bedieneinheiten und Sensoren zu steuern.

Nachfolgend soll die Erfindung anhand von Ausführungsbeispielen und den beiliegenden Zeichnungen näher erläutert werden. Es zeigen:
- Figur 1: schematische Darstellung einer ersten Ausführungsform der erfindungsgemäßen Anordnung zur Erfassung des Tageslichts;
- Figur 2: schematische Darstellung eines erfindungsgemäßen Systems zur tageslichtabhängigen Steuerung mit der in Figur 1 gezeigten Anordnung zur Erfassung des Tageslichts;
- Figur 3: schematische Darstellung einer zweiten Ausführungsform der erfindungsgemäßen Anordnung zur Erfassung des Tageslichts;
- Figur 4: schematische Darstellung eines erfindungsgemäßen Systems zur tageslichtabhängigen Steuerung mit der in Figur 3 gezeigten Anordnung zur Erfassung des Tageslichts;
- Figur 5: schematische Darstellung der Zuteilung verschiedener Himmelsbereiche zu verschiedenen Bereichen eines Raums.

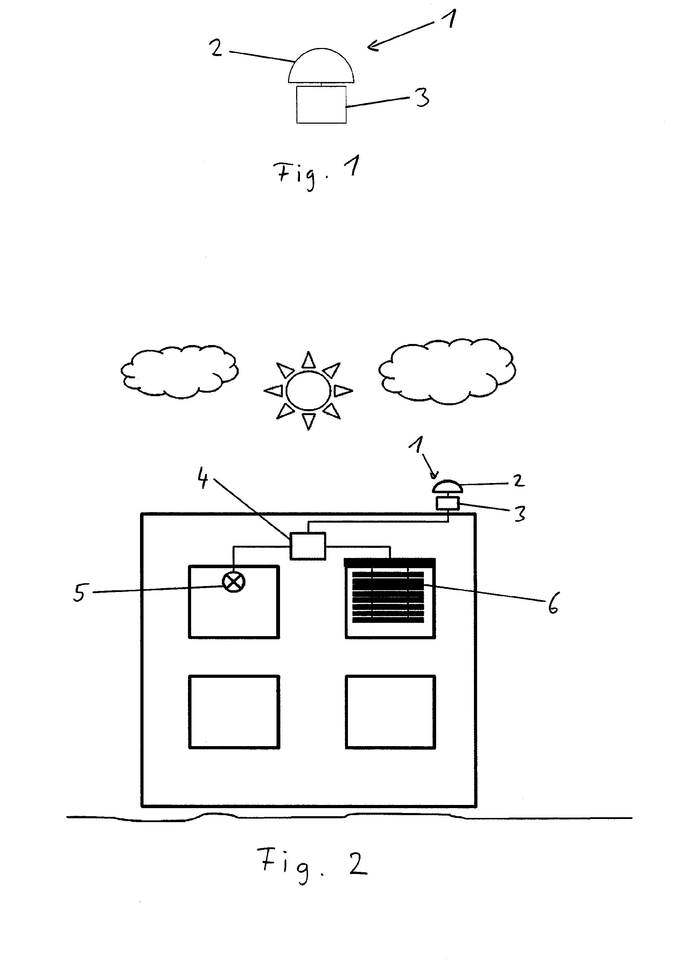

Figur 1 zeigt nun eine erfindungsgemäße Anordnung zur Erfassung des Tageslichts 1 bzw. einen Tageslichtmesskopf in einer ersten Ausführungsform. Hierbei ist vorgesehen, dass eine Auswerteeinheit 3 unmittelbar an einer digitalen Bilderfassungseinheit 2 angeordnet ist, wodurch die von der digitalen Bilderfassungseinheit 2 erhaltenen Bilddaten direkt an dieser bzgl. Informationen zum Tageslicht ausgewertet werden können.

Als digitale Bilderfassungseinheit 2 kann beispielsweise eine digitale Kamera mit einem CMOS- oder CCD-Sensor eingesetzt werden, wobei die digitale Kamera ein Weitwinkel- oder Fisch-Eye-Objektiv aufweist das dem CMOS- bzw. CCD-Sensor vorgeordnet ist. Durch ein derartiges Objektiv wird es möglich, einen möglichst großen Bereich des Himmels zu erfassen.

Die durch die digitale Bilderfassungseinheit 2 erfassten Bilddaten werden dann in der Auswerteeinheit 3 beispielsweise softwaretechnisch bzgl. der Informationen zum Tageslicht ausgewertet. Bei den Informationen zum Tageslicht kann es sich um die Leuchtdichten des Himmels, die Farben des Lichts und Farbtemperaturen handeln, wobei die Leuchtdichten des Himmels, die Stärke der Leuchtdichten und die Richtungsinformation in den Lichtquellen umfassen. Bei diesen Lichtquellen handelt es sich im Einzelnen um die Sonne, angestrahlte Wolken oder angestrahlte reflektierende Objekte.

Durch die digitale Bilderfassungseinheit 2 in Kombination mit der Auswerteeinheit 3 ist es nun möglich, dass, wie auch bereits bei den aus dem Stand der Technik bekannten Tageslichtmessköpfen die Richtung des einfallenden Lichts bzw. die Verteilung bestimmt wird. Zusätzlich ist es nun aber auch möglich, weitere Informationen zum Tageslicht durch die Bildauswertung zu erhalten. Beispielsweise ist es nunmehr möglich, das Wolkenbild zu analysieren und dies bei der Steuerung von entsprechenden Vorrichtungen zu berücksichtigen. So wäre es u.a. möglich, das für den Fall, dass die Bewölkung aufgelockert ist bzw. aus mehreren einzelnen Wolken besteht, welche für einen raschen Wechsel zwischen hoher und niedriger Helligkeit sorgen, eine Steuerung gewählt wird, die diesem raschen Wechsel nicht zwingend folgt, sondern eher ausgleichend wirkt.

Aber auch bei gleichbleibender mittlerer Leuchtdichte ergeben sich Vorteile gegenüber den herkömmlichen Tageslichtmessköpfen. So ist die durch ein Fenster in einen Raum eintretende Tageslichtmenge und -Verteilung abhängig von den Himmelsleuchtdichten. Beispielsweise wird bei geringerer mittlerer Leuchtdichte des Himmels auch weniger Licht in den Raum gelangen. Das kann bereits mit dem bestehenden Tageslichtmessköpfen gemessen werden und Kunstlicht entsprechend gesteuert werden. Bei gleicher mittlerer Leuchtdichte, aber unterschiedlicher Leuchtdichteverteilung am Himmel wird sich das Tageslicht aber unterschiedlich im Raum verteilen. Ist z.B. der Himmel in der Nähe des Horizontes sehr hell, so kann das Licht aus dieser Region des Himmels sehr tief in den Raum gelangen. Ist hingegen der Himmel in der Nähe des Zeniths hell, so wird dadurch der Raum in erster Linie in Fensternähe beleuchtet. Somit entstehen in Abhängigkeit von der Verteilung der Leuchtdichten unterschiedliche Abnahmefunktionen des Tageslichts in Abhängigkeit von der Position im Raum. Bei den bekannten Tageslichtmessköpfen konnte diese Abnahmefunktion nicht messtechnisch bestimmt werden und es wurde eine feste Abnahmefunktion abgespeichert, die jedoch zumeist nicht dem tatsächlichen Verlauf der Abnahmefunktion entspricht.

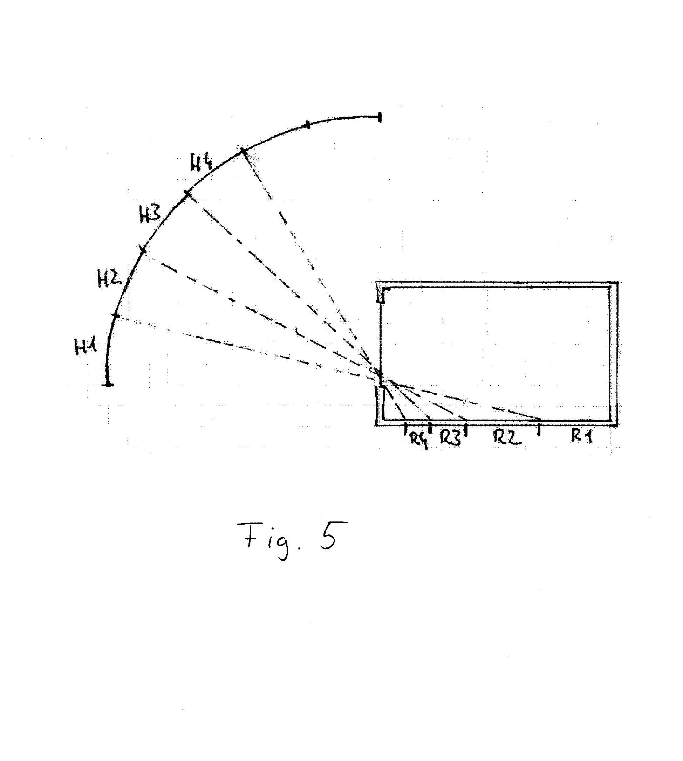

Bei der erfindungsgemäßen Anordnung zur Erfassung des Tageslichts 1 ist es nunmehr möglich, das durch die Messung der Verteilung der Himmelsleuchtdichten diese Abnahmefunktion rechnerisch für den jeweiligen Himmelszustand ermittelt wird. Dazu kann die gemessene Himmelsleuchtdichteverteilung direkt auf die räumliche Abnahme des Tageslichts in Abhängigkeit von der räumlichen Position rückgerechnet werden. Alternativ dazu kann vereinfacht für bestimmte Himmelssektoren (z.B. 30° horizontal x 15° vertikal) jeweils eine mittlere Leuchtdichte bestimmt werden. Jede dieser Zonen wird einem Raumbereich zugeordnet und ein mittlerer Tageslichtanteil für diesen Raumbereich in Abhängigkeit von der zugeordneten mittleren Himmelsleuchtdichte berechnet, wie dies in Figur 5 gezeigt ist, wo den Himmelsbereichen H1, H2, H3 und H4 jeweils die Raumbereiche R1, R2, R3 und R4 zugeordnet sind.

Da wie bereits erläutert die in Figur 1 gezeigte erste Ausführungsform der erfindungsgemäßen Anordnung zur Erfassung des Tageslichts 1 die Bilddaten unmittelbar in der digitalen Bilderfassungseinheit auswertet, ist es ohne Weiteres möglich, dass eine derartige Anordnung 1 einen aus dem Stand der Technik bekannten Tageslichtmesskopf ersetzt, wobei durch die Verwendung einer digitalen Bilderfassungseinheit 2 eine derartige erfindungsgemäße Anordnung 1 auch deutlich weniger Platz beansprucht als die aus dem Stand der Technik bekannten Tageslichtmessköpfe, da dort mehrere Photozellen als Sensoren notwendig sind, die entsprechend angeordnet sein müssen um die gewünschten Informationen zum Tageslicht zu erhalten.

In Figur 2 wird nun ein erfindungsgemäßes System zur tageslichtabhängigen Steuerung gezeigt, bei dem die in Figur 1 gezeigte erfindungsgemäße Anordnung zur Erfassung des Tageslichts 1 zum Einsatz kommt.

Bei dem System ist es vorgesehen, dass eine Steuereinheit 4 mindestens eine zu steuernde Vorrichtung in Abhängigkeit der Informationen zum Tageslicht steuert. In Figur 2 sind nun zwei derartige Vorrichtungen gezeigt, wobei es sich zum Einen um eine Leuchte 5 und zum Anderen um eine Jalousie 6 handelt, die beispielsweise in einem Gebäude angeordnet sein können. Sowohl die Leuchte 5 als auch die Jalousie 6 sind nun mit der Steuereinheit 4 verbunden, die ebenso in dem Gebäude angeordnet sein kann. Hierbei bietet es sich dann auch an, dass die Anordnung zur Erfassung des Tageslichts 1 auf dem Dach des Gebäudes angebracht ist. Desweiteren besteht auch eine Verbindung zwischen der Anordnung zur Erfassung des Tageslichts 1 bzw. der Auswerteeinheit 3 der Anordnung 1 und der Steuereinheit 4, worüber die Informationen zum Tageslicht von der Auswerteeinheit 3 an die Steuereinheit 4 übermittelt werden können. Diese Verbindung bzw. Übermittlung kann über eine Datenschnittstelle beispielsweise TCP/IP erfolgen. Aber auch andere Übertragungstechniken bzw. Verbindungen zwischen der Anordnung zur Erfassung des Tageslichts 1 und der Steuereinheit 4 wären hier denkbar.

Bei dem in Figur 2 gezeigten System ist es desweiteren vorgesehen, dass die digitale Bilderfassungseinheit 2 der erfindungsgemäßen Anordnung zur Erfassung des Tageslichts 1 lotrecht in den Himmel gerichtet ist, um möglichst gute Bilder über den Himmel bzw. die Umgebung zu erhalten. Diese Bilder werden dann wie bereits erläutert von der Auswerteeinheit 3 bzgl. der Informationen zum Tageslicht ausgewertet. Mithilfe dieser Informationen kann dann die Steuereinheit 4 die Jalousie 6 oder die Leuchte 5 entsprechend tageslichtabhängig steuern. Bei der Leuchte 5 ist es beispielsweise möglich, dass durch die Steuereinheit 4 die Beleuchtungsstärke, Lichtfarbe und Farbtemperatur der Leuchte 5 in Abhängigkeit des aktuellen Zustands außerhalb des Gebäudes gesteuert wird.

Auch die Jalousie 6 wird entsprechend dem Zustand außerhalb des Gebäudes gesteuert. Bei der zu steuernden Vorrichtung kann es sich aber auch um andere Blendschutzeinrichtungen oder Abschattungssysteme handeln, ebenso können auch andere Tageslichtsysteme durch die Steuereinheit 4 entsprechend gesteuert werden.

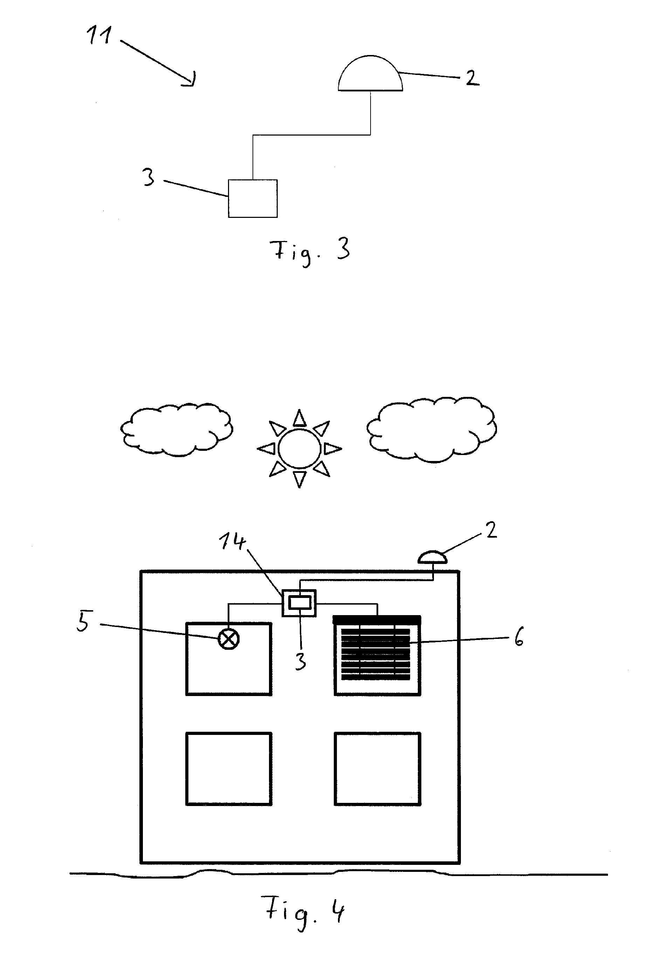

Figur 3 zeigt nun eine zweite Ausführungsform einer erfindungsgemäßen Anordnung zur Erfassung des Tageslichts 11 bzw. eines Tageslichtmesskopfs. Diese Anordnung 11 weist wiederum eine digitale Bilderfassungseinheit 2 und eine Auswerteeinheit 3 auf, wobei nun jedoch die Auswerteeinheit 3 beabstandet von der digitalen Bilderfassungseinheit 2 angeordnet ist. Die digitale Bilderfassungseinheit 2 und die Auswerteeinheit 3 weisen ansonsten jedoch dieselben Funktionen wie bei der in Figur 1 gezeigten Ausführungsform auf. Die Auswerteeinheit 3 wertet dementsprechend wiederum Bilddaten bzgl. Informationen zum Tageslicht aus, die von der digitalen Bilderfassungseinheit 2 erfasst werden.

Da die Auswerteeinheit 3 nun beabstandet von der digitalen Bilderfassungseinheit 2 angeordnet ist, ist eine Verbindung zwischen der digitalen Bilderfassungseinheit 2 und der Auswerteeinheit 3 vorgesehen, über die die erfassten Bilder von der digitalen Bilderfassungseinheit 2 zur Auswerteeinheit 3 übermittelt werden können. Diese Verbindung bzw. Übermittlung kann über eine Datenschnittstelle beispielsweise TCP/IP erfolgen. Aber auch andere Übertragungstechniken bzw. Verbindungen zwischen der digitalen Bilderfassungseinheit 2 und der Auswerteeinheit 3 wären hier denkbar.

In Figur 4 ist nun ein erfindungsgemäßes System zur tageslichtabhängigen Steuerung gezeigt, bei dem die in Figur 3 gezeigte erfindungsgemäße Anordnung zur Erfassung des Tageslichts 11 eingesetzt wird. Das in Figur 4 gezeigte System weist wie auch das in Figur 2 gezeigte System eine Steuereinheit 14, eine Leuchte 5 und eine Jalousie 6 auf. Im Gegensatz zu dem in Figur 2 gezeigten System ist nun hier jedoch vorgesehen, dass die Auswerteeinheit 3 der Anordnung zur Erfassung des Tageslichts 11 innerhalb der Steuereinheit 14 angeordnet ist. Die digitale Bilderfassungseinheit 2 ist demgegenüber nach wie vor außerhalb des Gebäudes an derselben Position auf dem Dach platziert, wie die Anordnung zur Erfassung des Tageslichts 1 in Figur 2. Die Bilddaten der digitalen Bilderfassungseinheit 2 können dann wie bereits erläutert beispielsweise über eine Datenschnittstelle übermittelt werden. Auch bei dem in Figur 4 gezeigten System ist es vorgesehen, dass die digitale Bilderfassungseinheit 2 lotrecht in den Himmel gerichtet ist.

Sowohl bei dem in Figur 2 gezeigten System als auch dem in Figur 4 gezeigten System ist es denkbar, dass mehrere Anordnungen zur Erfassung des Tageslichts 1 bzw. 11 vorgesehen sind. Bei dem in Figur 4 gezeigten System besteht dann darüber hinaus die Möglichkeit, dass eine gemeinsame in der Steuereinheit 14 angeordnete Auswerteeinheit die Funktionen der einzelnen Auswerteeinheiten ausführt.

Desweiteren besteht auch die Möglichkeit, dass Bedieneinheiten oder andere Sensoren an die Steuereinheit 4 bzw. 14 angeschlossen werden und ebenfalls Informationen zur Steuerung der Vorrichtungen liefern, die dann zusammen mit den Informationen zum Tageslicht von der Anordnung zur Erfassung des Tageslichts 1 bzw. 11 zur Steuerung der Vorrichtung verwendet werden. Bei den Bedieneinheiten kann es sich beispielsweise um einen Schalter oder Dimmer handeln, wodurch von einem Nutzer eine gewünschte Einstellung der Steuereinheit 4 bzw. 14 mitgeteilt werden kann. Als Sensoren könnten beispielsweise Bewegungsmelder, Temperatursensoren und Windsensoren oder auch die aus dem Stand der Technik bekannten Tageslichtmessköpfe, also Lichtsensoren mit Photozellen, Anwendung finden.

## Patentansprüche

1. Anordnung zur Erfassung des Tageslichts (1, 11), aufweisend
• eine digitale Bilderfassungseinheit (2) und
• eine Auswerteeinheit (3),
wobei die Auswerteeinheit (3) dazu ausgebildet ist, das durch die digitale Bilderfassungseinheit (2) erfasste Bild bezüglich Informationen zum Tageslicht auszuwerten.

2. Anordnung nach Anspruch 1,
**dadurch gekennzeichnet,**
**dass** es sich bei den Informationen zum Tageslicht um die Leuchtdichten des Himmels, Farben des Lichts und/oder Farbtemperaturen handelt, wobei die Leuchtdichten des Himmels die Stärke der Leuchtdichten und/oder die Richtungsinformationen der Lichtquellen, bspw. der Sonne, angestrahlten Wolken oder angestrahlten reflektierenden Objekte, umfassen.

3. Anordnung nach Anspruch 1 oder 2,
**dadurch gekennzeichnet,**
**dass** die digitale Bilderfassungseinheit (2) ein Weitwinkel- oder Fisch-Eye-Obj ektiv aufweist.

4. Anordnung nach einem der Ansprüche 1-3,
**dadurch gekennzeichnet,**
**dass** die digitale Bilderfassungseinheit (2) einen CMOS- oder CCD-Sensor aufweist.

5. Anordnung (1) nach einem der Ansprüche 1-4,
**dadurch gekennzeichnet,**
**dass** die Auswerteeinheit (3) an der digitalen Bilderfassungseinheit (2) angeordnet ist.

6. Anordnung (11) nach einem der Ansprüche 1-4,
**dadurch gekennzeichnet,**
**dass** die Auswerteeinheit (3) beabstandet von der digitalen Bilderfassungseinheit (2) angeordnet ist.

7. Anordnung nach Anspruch 6,
**dadurch gekennzeichnet,**
**dass** die digitale Bilderfassungseinheit (2) mit der Auswerteeinheit (3) in Kontakt steht und dazu ausgebildet ist, der Auswerteeinheit (3) das erfasste Bild zu übermitteln, wobei die digitale Bilderfassungseinheit (2) über eine Datenschnittstelle, beispielsweise TCP/IP, mit der Auswerteeinheit (3) in Kontakt steht.

8. System zur tageslichtabhängigen Steuerung mit
• mindestens einer zu steuernden Vorrichtung (5, 6),
• einer Steuereinheit (4) zur Steuerung der Vorrichtung (5, 6) und
• mindestens einer Anordnung zur Erfassung des Tageslichts (1) gemäß Anspruch 5,
**dadurch gekennzeichnet,**
**dass** die Anordnung zur Erfassung des Tageslichts (1) mit der Steuereinheit (4) in Kontakt steht und dazu ausgebildet ist, der Steuereinheit (4) die Informationen zum Tageslicht zu übermitteln, wobei die Steuereinheit (4) dazu ausgebildet ist, die zu steuerende Vorrichtung (5, 6) in Abhängigkeit der Informationen zum Tageslicht zu steuern.

9. System nach Anspruch 8,
**dadurch gekennzeichnet,**
**dass** die Anordnung zur Erfassung des Tageslichts (1) über eine Datenschnittstelle, beispielsweise TCP/IP, mit der Steuereinheit (4) in Kontakt steht.

10. System zur tageslichtabhängigen Steuerung mit
• mindestens einer zu steuernden Vorrichtung (5, 6),
• einer Steuereinheit (14) zur Steuerung der Vorrichtung (5, 6) und
• mindestens einer Anordnung zur Erfassung des Tageslichts (11) gemäß Anspruch 6 oder 7,
**dadurch gekennzeichnet,**
**dass** die Auswerteeinheit (3) der mindestens einen Anordnung (11) in der Steuereinheit (14) angeordnet ist und die Steuereinheit (14) dazu ausgebildet ist, die zu steuerende Vorrichtung (5, 6) in Abhängigkeit der Informationen zum Tageslicht zu steuern.

11. System nach Anspruch 10,
**dadurch gekennzeichnet,**
**dass** das System mehrere Anordnungen zur Erfassung des Tageslichts (11) gemäß Anspruch 6 oder 7 aufweist, wobei vorzugsweise die Funktionen der Auswerteeinheiten der Anordnungen in einer gemeinsamen Auswerteeinheit zusammengefasst sind.

12. System nach einem der Ansprüche 8-11,
**dadurch gekennzeichnet,**
**dass** die digitale Bilderfassungseinheit (2) derart angeordnet ist, dass die digitale Bilderfassungseinheit (2) lotrecht in den Himmel gerichtet ist.

13. System nach einem der Ansprüche 8-12,
**dadurch gekennzeichnet,**
**dass** es sich bei der zu steuernden Vorrichtung um eine Leuchte (5) handelt, wobei die Steuereinheit (4, 14) dazu ausgebildet ist, die Beleuchtungsstärke, Lichtfarbe und/oder Farbtemperatur der Leuchte (5) zu steuern.

14. System nach einem der Ansprüche 8-12,
**dadurch gekennzeichnet,**
**dass** es sich bei der zu steuernden Vorrichtung um eine Blendschutzeinrichtung oder ein Abschattungssystem, bspw. eine Jalousie (6), handelt.

15. System nach einem der Ansprüche 8-14,
**dadurch gekennzeichnet,**
**dass** das System Bedieneinheiten und Sensoren, bspw. Lichtsensoren mit Photozellen, Bewegungsmelder, Temperatursensoren und Windsensoren, aufweist, wobei die Bedieneinheiten und Sensoren an die Steuereinheit (4, 14) angeschlossen sind und die Steuereinheit (4, 14) dazu ausgebildet ist die zu steuernde Vorrichtung (5, 6) auch in Abhängigkeit von Informationen der Bedieneinheiten und Sensoren zu steuern.

16. Verfahren zur tageslichtabhängigen Steuerung einer zu steuernden Vorrichtung (5, 6), beim dem mit einer digitalen Bilderfassungseinheit (2) Bilder des Himmels erfasst werden, eine Auswerteeinheit (3) die erfassten Bilder auf Informationen zum Tageslicht auswertet und die zu steuernde Vorrichtung (5, 6) in Abhängigkeit der Informationen zum Tageslicht gesteuert wird.
